# EUROPÄISCHE PATENTANMELDUNG

(11) **EP 2 827 109 A2**
(43) Veröffentlichungstag der Anmeldung: **21.01.2015**
(21) Anmeldenummer: 14002336.7
(22) Anmeldetag: 08.07.2014
(51) Int. Cl.: G01F 1/115

(54) **Vorrichtung zur Erfassung des Volumenstromes von Medien in wenigstens einer Rohrleitung**

(30) Priorität: 15.07.2013 DE 202013006382 U
(71) Anmelder: PAW GmbH & Co. KG, 31789 Hameln (DE)
(72) Erfinder: Pommerening, Marc, 31789 Hameln (DE)
(74) Vertreter: Jabbusch, Matthias

(57) **Zusammenfassung**

Bei einer Vorrichtung zur Erfassung des Volumenstromes von Medien in wenigstens einer Rohrleitung vorzugsweise einer Solarstation, mit zumindest einem das Medium führenden Leitungsabschnitt, in dem wenigstens ein mittels des strömenden Mediums um seine Rotationsachse bewegter Messkörper (6) angeordnet ist, wobei der Messkörper (6) mit zumindest einem Signalauslöseelement (8) ausgerüstet ist, ist vorgesehen, dass der Messkörper (6) in einer Rotoraufnahme (7) drehbar gehalten ist und dass Messkörper (6) und Rotoraufnahme (7) aus Steckbauteilen (6', 6'', 7', 7'') zusammengesetzt sind.

## Beschreibung

Die Erfindung betrifft eine Vorrichtung zur Erfassung des Volumenstromes von Medien in wenigstens einer Rohrleitung vorzugsweise einer Solarstation, mit zumindest einem das Medium führenden Leitungsabschnitt, in dem wenigstens ein mittels des strömenden Mediums um seine Rotationsachse bewegter Messkörper angeordnet ist.

Vorrichtungen vorbekannter Gattung, wie zum Beispiel Durchflussmessgeräte, können zur Erfassung bzw. Bestimmung des Volumenstromes von Fluiden, beispielsweise eines Wärmeträgermediums aus einem Wasser-Propylenglykol-Gemisch, in Solarthermie-Anlagen dienen. Üblicherweise werden in Solarthermie-Anlagen Durchflussmessgeräte eingesetzt, welche nach dem Prinzip der Schwebekörper-Durchflussmessung arbeiten. Derartige Vorrichtungen weisen dazu einen senkrecht stehenden, sich nach oben erweiternden Leitungsabschnitt auf, der in mindestens einem vorbestimmten Bereich über wenigstens einen Abschnitt seiner Erstreckung transparente Eigenschaften hat. Im Inneren des senkrecht stehenden Leitungsabschnittes ist ein beweglicher Messkörper vorbestimmter Geometrie angeordnet. Der Messkörper verändert seine Position im Leitungsabschnitt dabei in Abhängigkeit zur Strömungsgeschwindigkeit des durch den Leitungsabschnitt fließenden Wärmeträgermediums. Auf dem transparent ausgebildeten Bereich des Leitungsabschnittes ist eine Messskala aufgebracht, mit Hilfe der und der Position des Messkörpers im Inneren des senkrecht stehenden Leitungsabschnittes, sich ein Wert für den in den Rohrleitungen der Solarthermie-Anlage anstehenden Volumenstrom bestimmen lässt.

Derartige Vorrichtungen haben jedoch den Nachteil, dass die kontinuierlich angezeigten Messwerte gegebenenfalls von einer Person abgelesen werden müssen, um eine Aussage über die Strömungsgeschwindigkeit in den Rohrleitungen der Solarthermie-Anlage, auch Solarstation genannt, zu erhalten. Notwendige Korrekturen des Volumenstromes in den Rohrleitungen der Solarstation sind von Hand vorzunehmen und im Anschluss stets am optisch abzulesenden Schwebekörper-Durchflussmesser zu kontrollieren, wodurch ein relativ hoher Aufwand bei der Nachregelung entsteht. Des Weiteren sind gewisse Messungenauigkeiten nicht auszuschließen, da sich die Viskosität des Wärmeträgermediums, in Abhängigkeit zu dessen Temperatur, welche bei der Messung nicht berücksichtigt wird, ändert und somit der tatsächliche in den Rohrleitungen vorherrschende Volumenstrom nur schwer ermittelbar ist.

Es ist auch schon vorgeschlagen worden, einen Messkörper mit zumindest einem Signalauslöseelement auszurüsten und einen Wandbereich des Leistungsabschnittes für Signale durchlässig auszubilden. Als Signalauslöseelement hat dabei ein Dauermagnet Anwendung gefunden, der mit einem Hall-Sensor in Wirkverbindung tritt. Damit kann der Volumenstrom erfasst werden, jedoch treten aufgrund der Verwendung des Dauermagnetes Nachteile auf. An dem Dauermagneten können sich nämlich ferromagnetische Partikel sammeln, welche die Funktion des Signalauslöseelementes beeinflussen. Die Rotation des Messkörpers kann beeinflusst sein. Eine Vorrichtung dieser Gattung ist aus der DE 20 2008 007 797 bekannt.

Der Erfindung liegt die Aufgabe zugrunde, eine Vorrichtung vorbezeichneter Gattung einfach und preiswert auszubilden.

Diese Aufgabe ist erfindungsgemäß dadurch gelöst, dass der Messkörper in einer Rotoraufnahme drehbar gehalten ist und dass Messkörper und Rotoraufnahme aus Steckbauteilen zusammengesetzt sind.

Der Messkörper, in dem das Signalauslöseelement angeordnet ist, wird bei Strömen des Volumenstroms in Drehung versetzt. Dadurch wird das Signalauslöseelement gedreht, dabei ist der Messkörper in der Rotoraufnahme drehbar gehalten.

Mit Hilfe eines sich um seine Rotationsachse bewegenden Messkörpers, der mit dem das Feld beeinflussenden Bauteil ausgerüstet ist, lässt sich an einem für Signale durchlässigen Wandbereich des Leitungsabschnittes eine sich in vorbestimmten Zeitabständen kontinuierlich wiederholende Feldänderung erzeugen. Die mittels einer Messeinrichtung erfasste Feldänderung ermöglicht eine genaue Angabe über die vom Messkörper ausgeführten Rotationsbewegungen und gibt mit Vorteil Aufschluss über die den Messkörper passierende Menge des Mediums. Ein Signalaufnehmer, welcher dem für Signale durchlässigen Wandbereich des Leitungsabschnittes zugeordnet ist, nimmt gleichzeitig eine Umwandlung des Messsignals in eine elektrische Ausgangsgröße, wie zum Beispiel eine Ausgangsspannung, vor, wodurch außerdem eine vorteilhaft einfache Weiterverarbeitung des Messsignals gewährleistet ist. Jeder Signalaufnehmer kann noch des Weiteren eine Signalaufbereitung in Form einer Verstärkung bzw. einer Filterung aufweisen.

Sowohl der Messkörper als auch die Rotoraufnahme sind nach der Erfindung aus Steckbauteilen zusammengesetzt. Damit ist eine einfache Ausbildung dieser Bauteile gegeben, weiterhin eine einfache Möglichkeit, das Signalauslöseelement in dem Messkörper anzuordnen. Die Steckbauteile können vor der Anordnung des Signalauslöseelementes in voneinander getrennter Form vorliegen, nach Einlage des Signalauslöseelementes kann zunächst der Messkörper zusammengesetzt werden, anschließend wird es in die gleichfalls aus Steckbauteilen zusammengesetzte Rotoraufnahme eingefügt. Insoweit liegt eine einfache und preiswerte Ausbildung vor.

Nach einer ersten Weiterbildung der Erfindung ist vorgesehen, dass der Messkörper eine Kammer für das Signalauslöseelement und an die Kammer angesetzte Flügelabschnitte hat. In der Kammer wird das Signalauslöseelement angeordnet. Die Kammer kann aus zwei Hälften bestehen, erst beim Zusammenfügen der Steckbauteile kann die Kammer hergestellt sein. Flügelabschnitte tragen zur Ausbildung des Messkörpers als ein Rotorbauteil bei, sie erzeugen bei Durchströmung der Rohrleitung eine Drehung des Messkörpers.

Der Messkörper wie auch die Rotoraufnahme können aus jeweils zwei Steckbauteilen zusammengesetzt sein. Bei der Rotoraufnahme können zwei Zylinderabschnitte vorgesehen sein, welche vorzugsweise baugleich sind. Bei einem Ineinanderstecken können beide Zylinderabschnitte um 180° zueinander gedreht werden und somit gleich ausgebildeten Steckerabschnitten ineinander gesteckt werden. Auch der Messkörper kann aus zwei baugleichen Steckbauteilen zusammengesetzt sein, bei einem Zusammenstecken wird das Signalauslöseelement aufgenommen.

Das Signalauslöseelement ist in einer Kammer des Messkörpers angeordnet. Dadurch ist das Signalauslöseelement auf vorteilhafte Weise in eine an die Wandung des Leitungsabschnittes angenäherte Position gebracht. Damit ist sichergestellt, dass die vom Signalauslöseelement verursachte Feldänderung durch den für Signale durchlässigen Wandbereich des Leitungsabschnittes hindurch vom Signalaufnehmer der erfindungsgemäß ausgebildeten Vorrichtung festgestellt wird. Es ist selbstverständlich auch möglich, mehrere Signalauslöseelemente im Messkörper anzuordnen, um im Falle einer geringen Drehzahl des Messkörpers, aufgrund eines niedrigen Volumenstromes in den Rohrleitungen z. B. der Solarstation, ein stets durch den Signalaufnehmer verwertbares Signal zu erzeugen.

Das Signalauslöseelement ist ein vorzugsweise in den Messkörper eingesetztes ferromagnetisches Metallstück, mit dem ein Magnetfeld beeinflusst werden kann. Der Einsatz eines Metallstücks hat den Vorteil, dass der Vorgang der Signalübertragung zwischen dem Signalauslöseelement und dem Signalaufnehmer berührungslos erfolgen kann. Demzufolge lässt sich ein möglicher mechanischer Verschleiß, welche bei Abtastung aneinanderreibende Oberfläche entsteht, mit Vorteil vermeiden. Es ist möglich, auch andere Felder beeinflussende Bauteile, wie zum Beispiel einen Spiegel in einem Lichtfeld, einzusetzen.

Ein Ausführungsbeispiel der Erfindung, aus dem sich weitere erfinderische Merkmale ergeben, ist in der Zeichnung dargestellt. Es zeigen:
- Fig. 1:: eine Schnittansicht einer Vorrichtung zur Erfassung des Volumenstromes von Medien, und
- Fig. 2:: eine gesprengte perspektivische Darstellung von Bauteilen der Vorrichtung gemäß Fig. 1.

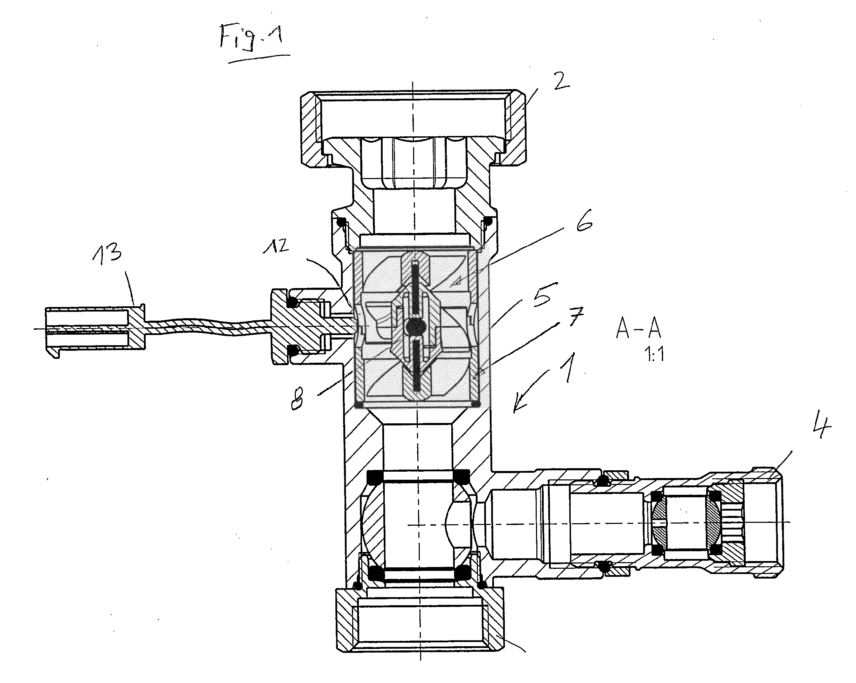

Die Vorrichtung in Fig. 1 zeigt eine Armatur 1 mit Rohranschlüssen 2, 3, 4. Im Verlauf der Armatur 1 ist ein Rohrleitungsabschnitt 5 gegeben.

Im Bereich des Rohrleitungsabschnittes 5 ist in die Armatur 1 ein Messkörper 6 eingesetzt. Der Messkörper 6 bildet einen Rotorkörper, er ist drehbar in einer Rotoraufnahme 7 aufgenommen. Im Inneren des Messkörpers 6 ist ein Signalauslöseelement 8 angeordnet.

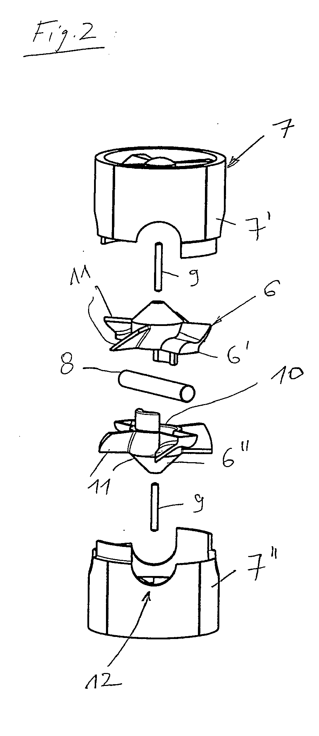

Fig. 2 zeigt, dass die Rotoraufnahme 7 aus zwei Steckbauteilen 7' und 7" ausgebildet ist. Beide Steckbauteile 7` und 7" sind baugleich, sie können ineinander gesteckt werden. Die Steckbauteile 7, 7" nehmen Achsen 9 für den Messkörper 6 auf.

Der Messkörper 6 besteht gleichfalls aus zwei Steckbauteilen 6' und 6". Diese Steckbauteile 6, 6" weisen eine Kammer 10 für das Signalauslöseelement 8 auf, an die Kammer 10 sind Flügelabschnitte 11 angesetzt.

Die Steckbauteile 7, 7" weisen Aussparungen 12 auf. Diese Aussparungen 12 sind im zusammengesetzten Zustand der Armatur 1 für die Zuordnung eines Temperatursensors 13 vorgesehen.

## Patentansprüche

1. Vorrichtung zur Erfassung des Volumenstromes von Medien in wenigstens einer Rohrleitung vorzugsweise einer Solarstation, mit zumindest einem das Medium führenden Leitungsabschnitt, in dem wenigstens ein mittels des strömenden Mediums um seine Rotationsachse bewegter Messkörper (6) angeordnet ist, wobei der Messkörper (6) mit zumindest einem Signalauslöseelement (8) ausgerüstet ist,
**dadurch gekennzeichnet,**
**dass** der Messkörper (6) in einer Rotoraufnahme (7) drehbar gehalten ist und dass Messkörper (6) und Rotoraufnahme (7) aus Steckbauteilen (6', 6", 7', 7") zusammengesetzt sind.

2. Vorrichtung nach Anspruch 1 **dadurch gekennzeichnet, dass** der Messkörper (6) eine Kammer (10) für das Signalauslöseelement (8) und an die Kammer (10) angesetzte Flügelabschnitte (11) hat.

3. Vorrichtung nach Anspruch 2, **dadurch gekennzeichnet, dass** der Messkörper (6) aus zwei baugleichen Steckbauteilen (6', 6") zusammengesetzt ist.

4. Vorrichtung nach einem der vorhergehenden Ansprüche, **dadurch gekennzeichnet, dass** die Rotoraufnahme (7) aus zwei baugleichen Zylinderabschnitten (7', 7") ausgebildet ist.

5. Vorrichtung nach einem der Ansprüche 1 bis 4, **dadurch gekennzeichnet, dass** das Signalauslöseelement (8) ein ferromagnetisches Metallstück ist.
